(19) Europäisches Patentamt / European Patent Office / Office européen des brevets

(11) **EP 2 310 439 B2**

(12) **NOUVEAU FASCICULE DE BREVET EUROPEEN**
Après la procédure d'opposition

(45) Date de publication et mention de la décision concernant l'opposition:
**03.03.2021 Bulletin 2021/09**

(45) Mention de la délivrance du brevet:
**08.02.2012 Bulletin 2012/06**

(21) Numéro de dépôt: **09740443.8**

(22) Date de dépôt: **06.08.2009**

(51) Int Cl.:
*C08G 69/26* [(2006.01)]   *C08G 69/28* [(2006.01)]
*C08G 69/36* [(2006.01)]   *C08L 77/06* [(2006.01)]
*B32B 27/34* [(2006.01)]   *C08J 5/18* [(2006.01)]
*C08K 3/32* [(2006.01)]

(86) Numéro de dépôt international:
**PCT/FR2009/051567**

(87) Numéro de publication internationale:
**WO 2010/015786 (11.02.2010 Gazette 2010/06)**

(54) **COPOLYAMIDE SEMI-AROMATIQUE ET SON PROCÉDÉ DE PRÉPARATION**

TEILAROMATISCHES COPOLYAMID UND HERSTELLUNGSVERFAHREN DAFÜR

SEMI-AROMATIC COPOLYAMIDE AND METHOD FOR THE PREPARATION THEREOF

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **08.08.2008 FR 0855502**
**03.10.2008 FR 0856706**

(43) Date de publication de la demande:
**20.04.2011 Bulletin 2011/16**

(73) Titulaire: **Arkema France**
**92700 Colombes (FR)**

(72) Inventeurs:
• **BRIFFAUD, Thierry**
**F-27300 Caorches Saint Nicolas (FR)**
• **BLONDEL, Philippe**
**F-27300 Bernay (FR)**
• **LEFEBVRE, Thierry**
**F-27170 Beaumont Le Roger (FR)**

(74) Mandataire: **Bandpay & Greuter**
**30, rue Notre-Dame des Victoires**
**75002 Paris (FR)**

(56) Documents cités:
**EP-A- 1 505 099     WO-A-93/14145**
**DE-A1- 3 605 202**

• **"Chapter 11.4.4" In: "Nylon Plastic Handbook", 1995 page 383,**

Remarques:
Le dossier contient des informations techniques présentées postérieurement au dépôt de la demande et ne figurant pas dans le présent fascicule.

EP 2 310 439 B2

## Description

La présente invention a pour objet un copolyamide semi-aromatique, son procédé de préparation, ainsi que ses utilisations, notamment dans la fabrication d'objets divers, comme des biens de consommation courante tels que des équipements électriques, électroniques ou automobiles, du matériel chirurgical, de l'emballage ou encore des articles de sport.

L'invention se rapporte également à une composition comprenant un tel copolyamide ainsi qu'aux utilisations de cette composition, notamment dans la fabrication de tout ou partie des objets qui viennent d'être énumérés ci-dessus.

*[L'art antérieur et le problème technique]*

Dans l'industrie automobile par exemple, les polyamides 12 et 11 sont très utilisés en raison de leurs remarquables propriétés mécaniques, leur facilité d'emploi et leur résistance au vieillissement. Cependant au-delà de 160°C de température de service, leur résistance thermomécanique n'est pas suffisante. Les copolyamides de formule 11/10.T, qui résultent de la polycondensation de l'acide amino-11-undecanoïque, de la 1,10-décanediamine et de l'acide téréphtalique permettent de remplacer les polyamides 12 et 11, tout en conduisant à une tenue thermomécanique améliorée, et tout en conservant leur facilité de transformation et leur souplesse.

Le document WO 93/14145 décrit la synthèse de polyamides dérivés de dodécane diamine et d'acide téréphtalique, présentant une température de fusion élevée et une bonne stabilité dimensionnelle.

Le document EP 1 505 099 décrit des polyamides semi-aromatiques, tel que le copolyamide de formule 11/10.T, présentant des propriétés intéressantes. Il a été montré, que ces polyamides sont souples et présentent une faible reprise en eau. Ils ont aussi de bonnes propriétés d'allongement et une résistance thermomécanique élevée.

Or, ces polyamides restent encore à améliorer, notamment en terme de cristallinité, de cinétique de cristallisation en vue d'améliorer la tenue en température du copolyamide, ou encore d'améliorer leurs propriétés de tenue au choc.

Ce problème se pose principalement pour les copolyamides de formule 11/10.T et également pour des copolyamides de type X.Y/10.T.

Ainsi, il existe un réel besoin de trouver des copolyamides semi-aromatiques présentant des propriétés améliorées, notamment mécaniques, tout en conservant les avantages décrits ci-dessus en terme de tenue à haute température, ainsi que leurs procédés de préparation.

*[Brève description de l'invention]*

De façon surprenante, la demanderesse a trouvé que ces besoins sont atteints avec un copolyamide selon la revendication 1.

En effet, les copolyamides de formule 11/10.T tels que décrits dans le document EP 1 505 099 présentent un indice de polymolécularité, noté Ip mesuré par chromatographie d'exclusion stérique ou de perméation de gel (en langue anglaise : Gel Permeation Chromatography) élevé. Généralement, il est de l'ordre de 5 à 6.

L'indice de polymolécularité donne une première idée de la distribution des masses molaires des différentes macromolécules au sein du polymère. Pour un polymère parfait, dans lequel toutes les macromolécules seraient linéaires, auraient une même longueur, et par conséquent une même masse molaire, l'indice de polymolécularité Ip serait égal à 1. Pour un polyamide obtenu par polycondensation à partir, entre autres monomères, de diamines et de diacides carboxyliques, l'indice de polymolécularité attendu est de 2,0.

Un indice de polymolécularité supérieur à 2 peut être dû à la présence de ramifications sur la chaîne principale du polymère. Dans le cas des copolyamides, elles peuvent apparaître sur l'atome d'azote de la fonction amide. Ainsi, elles peuvent être quantifiées par RMN (Résonance Magnétique Nucléaire) en comparant le taux d'amide aromatique tertiaire (ramifié) au taux d'amide aromatique secondaire (linéaire).

Il s'est avéré que la synthèse de copolyamide à haut indice de polymolécularité de formule 11/10.T tel que décrit dans le document EP 1 505 099 est difficile à contrôler. En effet, la viscosité de ce polyamide a tendance à augmenter rapidement, conduisant à une mauvaise vidange des réacteurs de synthèse.

Ainsi, la demanderesse a trouvé qu'en sélectionnant le copolyamide en fonction de son indice de polymolécularité et notamment en le choisissant inférieur ou égal à 3,5, le copolyamide présentait des propriétés améliorées.

Par exemple, il a été constaté que lorsque le copolyamide de formule 11/10.T présentait un indice de polymolécularité élevé, la cinétique de cristallisation était plus faible, la cristallinité moindre, le copolyamide était plus fragile, c'est-à-dire présentait une mauvaise tenue au choc, un allongement à la rupture plus faible, par rapport à un copolyamide présentant un indice de polymolécularité inférieur ou égal à 3,5. De plus, lorsque l'indice de polymolécularité est très élevé, le copolyamide présente une gélification et une perte des propriétés thermoplastiques.

La présente invention a également pour objet le procédé de préparation dudit copolyamide mettant en oeuvre de l'acide hypophosphoreux ou l'un de ses sels dans l'étape de polycondensation.

En effet, il a été observé que l'ajout de l'acide hypophosphoreux ou de l'un de ses sels lors de la polycondensation des comonomères permettait de faire diminuer l'indice de polymolécularité du copolyamide final, par rapport aux copolyamides connus, à une valeur inférieure ou égale à 3,5, et plus particulièrement à une valeur comprise entre 2,0 et 3,0.

*[Description détaillée de l'invention]*

D'autres caractéristiques, aspects, objets et avantages de la présente invention apparaîtront encore plus clairement à la lecture de la description et des exemples qui suivent. L'invention porte sur un copolyamide de formule suivante :

$$A/10.T$$

dans laquelle: A désigne l'acide 10-aminoundécanoïque (noté 11), l'acide amino-11-undécanoïque (noté 11), l'acide amino-12-dodécanoïque (noté 12), 10. T désigne un motif obtenu à partir de la polycondensation de la 1,10-décanediamine et de l'acide téréphtalique, ledit copolyamide présentant un indice de polymolécularité, noté Ip inférieur ou égal à 3,5, mesuré par chromatographie de perméation de gel (en langue anglaise : Gel Permeation Chromatography).
De préférence, l'indice de polymolécularité dudit copolyamide est compris entre 2,0 et 3,0.
Cet indice est mesuré de manière classique et connue de l'homme du métier, par chromatographie d'exclusion stérique ou de perméation de gel (en langue anglaise : Gel Permeation Chromatography) comme indiqué ci-dessus. De préférence, l'indice de polymolécularité des copolyamides selon l'invention est mesuré par chromatographie de perméation de gel. Plus particulièrement, il est mesuré dans un solvant approprié pour le copolyamide, tel qu'un solvant fluoré comme par exemple l'hexafluoroisopropanol, à une température comprise entre 20°C et 50°C, de préférence à 40°C.
Il est précisé que l'expression "compris entre" utilisée dans les paragraphes précédents, mais également dans la suite de la présente description, doit s'entendre comme incluant chacune des bornes mentionnées.
De préférence, les proportions molaires en 1,10-décanediamine (notée 10) et en acide téréphtalique (noté T) sont préférentiellement stoechiométriques.
De préférence, le rapport molaire de motif(s) A sur le(s) motif(s) 10.T est compris entre 0,1 et 1, et de préférence entre 0,2 et 0,7.
Un autre objet de l'invention consiste en un procédé de préparation du copolyamide tel que défini ci-dessus. Ce procédé comprend une étape de polycondensation des comonomères tels que définis ci-dessus, à savoir au moins un monomère conduisant au motif A, la 1,10-décanediamine et l'acide téréphtalique, en présence d'acide hypophosphoreux ou d'au moins un de ses sels présent(s) en une teneur comprise entre 0,05 et 3 % en poids par rapport au poids de la somme des comonomères présents dans le milieu réactionnel.
L'acide hypophosphoreux utilisé dans le procédé selon l'invention est de formule $H_3PO_2$. Il est également possible d'utiliser l'un de ses sels tel que l'hypophosphite de sodium, qui est commercialisé sous sa forme monohydrate ou un autre de ses sels tels que les sels de calcium, lithium, magnésium, potassium, vanadium, zinc, manganèse, étain, titane, zirconium, antimoine, germanium, aluminium et ammonium.
La demanderesse a trouvé que l'acide hypophosphoreux ou l'un de ses sels utilisé dans le procédé de préparation du copolyamide cité ci-dessus n'a pas une fonction de catalyseur, comme décrit dans l'art antérieur. En effet, dans la réaction de polycondensation selon l'invention, il n'agit pas sur la vitesse de la polymérisation, contrairement à l'acide phosphorique (la polymérisation est plus rapide en l'absence d'acide hypophosphoreux ou du sel de l'acide).
L'acide hypophosphoreux ou l'un de ses sels n'a pas non plus d'action antioxydante vis à vis du produit obtenu. Dans le cadre de la polycondensation selon l'invention, il a été observé que l'acide hypophosphoreux ou l'un de ses sels, notamment celui de sodium, réduisait la teneur en ramifications de la chaîne principale, agissant ainsi directement sur l'indice de polymolécularité.
De préférence, l'acide hypophosphoreux ou l'un de ses sels peut être utilisé à une teneur comprise entre 0,05 à 1 % en poids par rapport au poids de la somme des comonomères présents dans le milieu réactionnel.
La teneur en poids de l'acide hypophosphoreux ou ses sels peut également être exprimée en ppm par rapport à la somme du poids des comonomères présents dans le milieu réactionnel. Cette teneur peut être de 500 à 30000 ppm, de préférence de 500 à 10000 ppm.
Le copolyamide selon l'invention peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être la 1,10-décanediamine, ou, l'acide 11-aminoundécanoïque.
Il existe à ce jour plusieurs procédés de préparation de tels polyamides semi-aromatiques.
Les modes de mise en oeuvre du procédé décrits ci-après le sont avec le cas dans lequel A est un aminoacide.

Selon un premier mode de mise en oeuvre du procédé selon la présente invention, ledit procédé comprend l'étape unique de réaction entre l'aminoacide A et de la combinaison stoechiométrique de la 1,10-décanediamine et l'acide téréphtalique, en présence d'hypophosphite de sodium, d'eau et éventuellement d'autres additifs.

Selon ce premier mode de réalisation, l'étape unique est effectuée dans une gamme de température comprise entre 200 et 380°C.

Cette étape est effectuée sous une atmosphère inerte et dans une gamme de pression comprise entre 0,01 et 50 bars.

Cette étape est constituée de plusieurs sous-étapes. Au cours de la première sous-étape, le réacteur est maintenu sous une pression autogène de vapeur d'eau comprise entre 10 et 50 bars à un premier palier de température. Au cours de la seconde sous-étape, la pression est progressivement ramenée à la pression atmosphérique et la température est augmentée à un second palier de température. Le temps de réaction est généralement de 30 minutes à 10 heures, et dépend de la température. Plus la température de réaction est élevée, plus le temps de réaction est faible. Le temps de réaction doit être, dans tous les cas, suffisant pour assurer que la réaction s'est produite de façon quantitative.

Les paliers de température se situent dans la gamme de 200 à 380°C définie ci-dessus.

Selon un second mode de mise en oeuvre du procédé selon la présente invention, ledit procédé comprend deux étapes. La première étape conduit à l'obtention d'un oligomère diacide, qui va se polycondenser au cours de la seconde étape avec la 1,10-décanediamine, selon l'enchaînement ci-dessous :

- (i) une première étape de réaction entre l'acide téréphtalique, avec l'aminoacide A, en présence d'un sel hypophosphite ; et
- (ii) une seconde étape de réaction de l'oligomère diacide ainsi formé à l'étape précédente avec la 1,10-décanediamine.

Dans la première étape de réaction, on prépare l'oligomère diacide par condensation de l'acide téréphtalique, avec l'aminoacide A, en présence d'un sel hypophosphite. La réaction s'effectue en réacteur sous atmosphère inerte, à pression atmosphérique et/ou sous pression en maintenant les réactifs, de préférence sous agitation, à une température comprise entre 140 et 350°C, et de préférence comprise entre 200 et 300°C. La réaction s'effectue généralement en 1 à 5 heures sous pression atmosphérique ou sous une pression maximale de 50 bars.

Dans la seconde étape, on ajoute sous pression atmosphérique, à l'oligomère diacide formé à l'étape précédente, la 1,10-décanediamine que l'on fait réagir à une température comprise entre 200 et 350°C, de préférence 240 et 300°C. La réaction s'effectue généralement en atmosphère inerte en 1 à 10 heures sous vide et/ou à la pression atmosphérique et/ou à une pression maximale de 50 bars.

Selon un troisième mode de mise en oeuvre du procédé selon la présente invention, ledit procédé comprend deux étapes :

- (i) une première étape de réaction de l'aminoacide A avec l'acide téréphtalique, et avec de 10 à 90% en poids de la 1,10-décanediamine, en présence d'un sel hypophosphite ; et
- (ii) une seconde étape de réaction de l'oligomère produit de l'étape (i) avec le solde de la 1,10-décanediamine en une ou plusieurs fois.

Dans les deux étapes, la température est comprise entre 220 et 380°C, de préférence 280 et 330°C. Le procédé est mis en oeuvre sous atmosphère inerte, sous pression jusque 50 bars ou à pression atmosphérique, ou sous vide. La réaction s'effectue généralement en 1 à 10 heures. Selon un quatrième mode de mise en oeuvre du procédé selon la présente invention, ledit procédé comprend deux étapes :

- (i) une première étape de réaction de l'aminoacide A avec l'acide téréphtalique, toute la diamine, en présence d'un sel hypophosphite ; un oligomère est obtenu par vidange du réacteur sous pression de vapeur d'eau et cristallisation dudit oligomère,
- (ii) une seconde étape de post-polymérisation à pression atmosphérique ou sous vide de l'oligomère produit de l'étape (i).

Dans la première étape, la température est comprise entre 200 et 300°C, de préférence 220 et 260°C. Le procédé est mis en oeuvre sous atmosphère inerte, sous pression jusqu'à 50 bars. La réaction s'effectue généralement en 1 à 10 heures. Un "prépolymère" est sorti du réacteur, dont le degré d'avancement de la réaction est compris entre 0,4 et 0,99.

Dans la seconde étape, la température est comprise entre 220 et 380°C, de préférence 280 et 330°C. Le procédé est mis en oeuvre sous atmosphère inerte, sous pression atmosphérique ou sous vide. La réaction s'effectue généralement en quelques secondes et jusqu'à plusieurs dizaines d'heures selon la température de polymérisation.

Ce prépolymère peut être repris directement ou avec un stockage intermédiaire sous forme solide (granulé ou poudre par exemple), afin d'effectuer la fin de la polycondensation. Cette opération est dite : remontée en viscosité. Cette remontée en viscosité peut être effectuée sur un réacteur de type extrudeuse sous pression atmosphérique ou sous vide. Cette remontée en viscosité peut aussi, dans le cas des copolyamides cristallins ou semi-cristallins, être effectuée en phase solide, à une température située entre la température de transition vitreuse (Tg) et la température de fusion. Classiquement, il s'agit d'une température d'environ 100°C au-dessus de la Tg. Le chauffage peut être assuré par un gaz ou fluide caloporteur, tel que l'azote, la vapeur d'eau ou des liquides inertes comme certains hydrocarbures.

Les procédés selon la présente invention peuvent être mis en oeuvre dans tout réacteur classiquement utilisé en polymérisation, tel que des réacteurs à agitateurs à ancre ou à rubans. Cependant, lorsque le procédé comporte une étape (ii), telle que définie ci-dessus, il peut aussi être mise en oeuvre dans un réacteur horizontal ou finisseur, plus communément appelé par l'homme de l'art "finisher". Ces finishers peuvent être équipés de dispositif de mise sous vide, d'introduction de réactif (ajout de diamine), qui peut être étagé ou non, et peuvent fonctionner dans un large intervalle de température.

Il est possible d'ajouter, à ces copolyamides, à l'issue du procédé ou au cours de la seconde étape, lorsque le procédé comporte deux étapes, outre le solde de diamine, des additifs habituels des polyamides, tels que définis ci-après.

De préférence, les additifs au copolyamide préparé selon la présente invention se présentent en une quantité jusqu'à 90%, de préférence de 1 à 60%, en poids par rapport au poids de la composition.

L'invention se rapporte également au copolyamide susceptible d'être obtenu par les procédés définis ci-dessus.

L'invention se rapporte également à une composition comprenant au moins un copolyamide selon l'invention.

Une composition conforme à l'invention peut en outre comprendre au moins un deuxième polymère.

Avantageusement, ce deuxième polymère peut être choisi parmi un polyamide semi-cristallin, un polyamide amorphe, un copolyamide semi-cristallin, un copolyamide amorphe, un polyétheramide, un polyesteramide, un polyester aromatiques, un arylamide et leurs mélanges.

Ce deuxième polymère peut également être choisi parmi l'amidon, qui peut être modifié et/ou formulé, la cellulose ou ses dérivés comme l'acétate de cellulose ou les éthers de cellulose, le polyacide lactique, le polyacide glycolique et les polyhydroxyalcanoate.

En particulier, ce deuxième polymère peut être une ou plusieurs polyoléfines fonctionnelles ou non fonctionnelles, réticulées ou non.

S'agissant des polyoléfines réticulées, cette phase peut provenir de la réaction (i) de deux polyoléfines ayant des groupes réactifs entre eux, (ii) de polyoléfines maléisées avec une molécule diamino monomérique, oligomérique ou polymérique ou (iii) d'une (ou plusieurs) polyoléfine insaturée porteur d'insaturation et réticulable par exemple par voie peroxyde.

Parmi les voies de réaction (i), (ii) et (iii) citées, c'est la réaction de deux polyoléfines (i) qui est privilégiée, la phase réticulée correspondante provenant par exemple de la réaction :

- d'un produit (A) comprenant un époxyde insaturé,
- d'un produit (B) comprenant un anhydride d'acide carboxylique insaturé,
- éventuellement d'un produit (C) comprenant un acide carboxylique insaturé ou d'un acide alpha-oméga-aminocarboxylique.

Produit A

A titre d'exemple de produit (A), on peut citer ceux contenant de l'éthylène et un époxyde insaturé.

Selon une première forme de l'invention, (A) est soit une polyoléfine greffée par un époxyde insaturé, soit un copolymère de l'éthylène et d'un époxyde insaturé..

**[0059]** * S'agissant de la polyoléfine greffée par un époxyde insaturé, on entend par polyoléfine les polymères comprenant des motifs oléfines, tels que par exemple des motifs éthylène, propylène, butène-1, ou tout autre alpha-oléfine. A titre d'exemple, on peut citer :

- les polyéthylènes tels que les LDPE, HDPE, LLDPE ou VLDPE, le polypropylène, les copolymères éthylène/propylène, les EPR (éthylène/propylène Rubber) ou encore les PE métallocènes (copolymères obtenus par catalyse monosite),
- les copolymères blocs styrène/éthylène-butène/styrène (SEBS), les copolymères blocs styrène/butadiène/styrène (SBS), les copolymères blocs styrène/isoprène/styrène (SIS), les copolymères blocs styrène/éthylène-propylène/styrène, les éthylène/propylène/diène (EPDM) ;
- les copolymères de l'éthylène avec au moins un produit choisi parmi les sels
- ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène/acétate de vinyle ou les copolymères éthylène/(méth)acrylate d'alkyle. La densité peut être avantageusement comprise entre 0,86 et 0,965, l'indice de fluidité (MFI) peut être compris entre 0,3 et 40 (en g/10 min à 190°C sous 2,16 kg).

**[0061]** * S'agissant des copolymères de l'éthylène et d'un époxyde insaturé, on peut citer par exemple les copolymères de l'éthylène d'un (meth)acrylate d'alkyle et d'un époxyde insaturé ou les copolymères de l'éthylène, d'un ester vinylique d'acide carboxylique saturé et d'un époxyde insaturé. La quantité époxyde peut être jusqu'à 15 % en poids du copolymère et la quantité d'éthylène d'au moins 50 % en poids.

Avantageusement, (A) est un copolymère de l'éthylène d'un (meth)acrylate d'alkyle et d'un époxyde insaturé.

De préférence, le (meth)acrylate d'alkyle est tel que l'alkyle possède 2 à 10 atomes de carbone.

Le MFI (indice de fluidité à l'état fondu) de (A) peut être par exemple entre 0,1 et 50 (g/10 min à 190°C sous 2,16 kg).

Des exemples d'acrylate ou méthacrylate d'alkyle utilisables sont notamment le methacrylate de méthyle, l'acrylate d'éthyle, l'acrylate de n-butyle, l'acrylate d'isobutyle, l'acrylate de 2-éthylhexyle. Des exemples d'époxydes insaturés utilisables sont notamment :

- les esters et éthers de glycidyle aliphatiques tels que l'allylglycidyléther, le vinylglycidyléther, le maléate et l'itaconate de glycidyle, l'acrylate et le methacrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, 5-norbornène-2-méthyl-2-glycidyl carboxylate et endocis-bicyclo(2,2,1)-5-heptène-2,3-diglycidyl dicarboxylate.

Selon une autre forme de l'invention, le produit (A) est un produit ayant deux fonctions époxyde, tel que par exemple le diglycidyl éther du bisphénol A (DGEBA).

Produit B

A titre d'exemple de produit (B), on peut citer ceux contenant de l'éthylène et un anhydride d'acide carboxylique insaturé.

(B) est soit un copolymère de l'éthylène et d'un anhydride d'acide carboxylique insaturé, soit une polyoléfine greffée par un anhydride d'acide carboxylique insaturé.

La polyoléfine peut être choisie parmi les polyoléfines citées plus haut et devant être greffées par un époxyde insaturé.

Des exemples d'anhydrides d'acide dicarboxylique insaturé utilisables comme constituants de (B) sont notamment l'anhydre maléique, l'anhydride itaconique, l'anhydride citraconique, l'anhydride tétrahydrophtalique.

A titre d'exemples, on peut citer les copolymères de l'éthylène, d'un (meth)acrylate d'alkyle, d'un anhydride d'acide carboxylique insaturé et les copolymères de l'éthylène, d'un ester vinylique d'acide carboxylique saturé et d'un anhydride d'acide carboxylique insaturé.

La quantité d'anhydre carboxylique insaturé peut être jusqu'à 15 % en poids du copolymère et la quantité d'éthylène d'au moins 50 % en poids.

Avantageusement, (B) est un copolymère de l'éthylène d'un (meth)acrylate d'alkyle et d'un anhydride carboxylique insaturé. De préférence, le (meth)acrylate d'alkyle est tel que l'alkyle possède 2 à 10 atomes de carbone.

Le (méth)acrylate d'alkyle peut être choisi parmi ceux cités plus haut.

Le MFI de (B) peut être par exemple entre 0,1 et 50 (g/10 min à 190 °C sous 2,16 kg).

Selon une autre forme de l'invention, (B) peut être choisi parmi les acides polycarboxyliques aliphatiques, alicycliques ou aromatiques, leurs anhydrides partiels ou totaux.

A titre d'exemples d'acides aliphatiques, on peut citer l'acide succinique, l'acide glutarique, l'acide pimélique, l'acide azélaïque, l'acide sébacique, l'acide adipique, l'acide dodécanedicarboxylique, l'acide octadécanedicarboxylique, l'acide dodécènesuccinique et l'acide butanetétracarboxylique.

A titre d'exemples d'acides alicycliques, on peut citer l'acide cyclopentanedicarboxylique, l'acide cyclopentanetricarboxylique, l'acide cyclopentanetétracarboxylique, l'acide cyclohexane dicarboxylique, l'acide hexane tricarboxylique, l'acide méthylcyclopentane dicarboxylique, l'acide tétrahydrophtalique, l'acide endométhylènetétrahydrophtalique et l'acide méthylèndométhylène-tetrahydrophtalique.

A titre d'exemples d'acides aromatiques, on peut citer l'acide phtalique, l'acide isophtalique, l'acide téréphtalique, l'acide triméllitique, l'acide trimésique, l'acide pyromellitique.

A titre d'exemples d'anhydrides, on peut citer les anhydrides partiels ou totaux des acides précédents.

On utilise avantageusement l'acide adipique.

On ne sortirait pas du cadre de l'invention, si une partie du copolymère (B) est remplacée par un copolymère éthylène-acide acrylique ou un copolymère éthylène - anhydride maléique, l'anhydride maléique ayant été en tout ou partie hydrolysé. Ces copolymères peuvent aussi comprendre un (meth)acrylate d'alkyle. Cette partie peut représenter jusqu'à 30% de (B).

Produit C

Quant au produit (C) comprenant un acide carboxylique insaturé, on peut citer à titre d'exemple les produits (B) hydrolysés en tout ou partie. (C) est par exemple un copolymère de l'éthylène et d'un acide carboxylique insaturé et avantageusement un copolymère de l'éthylène et de l'acide (méth)acrylique.

On peut encore citer les copolymères de l'éthylène, d'un (méth)acrylate d'alkyle et de l'acide acrylique.

Ces copolymères ont un MFI entre 0,1 et 50 (g/10 min à 190°C sous 2,16 kg).

La quantité d'acide peut être jusqu'à 10 % en poids et de préférence 0,5 à 5 %. La quantité de (méth)acrylate est de 5 à 40 % en poids.

(C) peut aussi être choisi parmi les acides alpha-oméga-aminocarboxyliques, tels que par exemple $NH_2$-$(CH_2)_5COOH$, $NH_2$-$(CH_2)_{10}COOH$ et $NH_2(CH_2)_{11}$-$COOH$ et de préférence l'acide aminoundécanoïque.

La proportion de (A) et (B) nécessaire pour former la phase réticulée est déterminée selon les règles habituelles de l'art par le nombre de fonctions réactives présentes dans (A) et dans (B).

Par exemple, dans les phases réticulées contenant (C) choisies parmi les acides alpha-oméga-aminocarboxyliques, si (A) est un copolymère de l'éthylène d'un (meth)acrylate d'alkyle et d'un époxyde insaturé et (B) un copolymère de l'éthylène, d'un (méth)acrylate d'alkyle et d'un anhydride d'acide carboxylique insaturé, les proportions sont telles que le rapport entre les fonctions anhydride et les fonctions époxy soit voisin de 1.

La quantité d'acide alpha-oméga-aminocarboxylique est alors de 0,1 à 3 %, et de préférence 0,5 à 1,5 % de (A) et (B).

S'agissant de (C) comprenant un acide carboxylique insaturé, c'est-à-dire (C) étant choisi, par exemple parmi les copolymères éthylène/(méth)acrylate d'alkyle/acide acrylique, la quantité de (C) et (B) peut être choisie de telle sorte que le nombre de fonctions acide et de fonctions anhydride soit au moins égal au nombre de fonctions époxyde, et avantageusement on utilise des produits (B) et (C) tels que (C) représente 20 à 80 % en poids de (B) et de préférence 20 à 50 %.

On ne sortirait pas du cadre de l'invention, si on ajoutait un catalyseur.

Ces catalyseurs sont généralement utilisés pour les réactions entre les époxy et les anhydrides.

Parmi les composés capables d'accélérer la réaction entre la fonction époxy présente dans (A) et la fonction anhydride ou acide présente dans (B), on peut citer notamment :

-    des amines tertiaires, telles que la diméthyllaurylamine, la diméthylstéarylamine, la N-butylmorpholine, la N,N-diméthyl cyclohexylamine, la benzyldiméthylamine, la pyridine, la diméthyl amino-4-pyridine, le méthyl-1-imidazole, la tétraméthyléthyl hydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine ;
-    le 1,4-diazabicyclo[2,2,2]octane (DABCO) ;
-    des phosphines tertiaires telles que la triphénylphosphine ;
-    des alkyldithiocarbamates de zinc.

La quantité de ces catalyseurs est avantageusement de 0,1 à 3 %, et de préférence 0,5 à 1 % de (A) + (B) + (C).

De préférence, les polyoléfines réticulées sont présentes dans la composition généralement en une teneur de 5 à 50%, de préférence l'ordre de 30% en poids par rapport au poids total de la composition.

S'agissant des polyoléfines non réticulées, on peut citer les polyoléfines décrites dans le paragraphe précédent et destinées à être greffées par des groupes réactifs. On peut encore citer les produits (A) ou (B) ou (C) du paragraphe précédent, mais utilisés seuls pour ne pas réticuler. A titre d'exemple, on peut citer les élastomères EPR, EPDM ces élastomères pouvant être greffés pour faciliter leur compatibilisation avec le copolyamide. On peut encore citer les élastomères acryliques, par exemple ceux du type NBR, HNBR, X-NBR.

La composition selon l'invention peut également comprendre en outre au moins un additif, comme précédemment mentionné dans le cadre du procédé de préparation du copolyamide.

Cet additif peut notamment être choisi parmi des, les fibres, les colorants, les stabilisants à la lumière, notamment UV et/ou à la chaleur, les plastifiants, les agents de démoulage, les agents d'ignifugation, les charges habituelles telles que talc, fibres de verre, pigments, oxydes métalliques, métaux, les modifiants chocs, les agents tensioactifs, les azurants optiques, les anti-oxydants, les cires naturelles et leurs mélanges.

Les charges envisagées dans le cadre de la présente invention incluent les charges minérales classiques, telles que les charges choisies dans le groupe, donné à titre non-limitatif, comprenant: citer la silice, le noir de carbone, les nanotubes de carbone, le graphite expansé, l'oxyde de titane, les billes de verre, kaolin, magnésie, scories. La charge utilisée plus généralement est formée de fibres de verre, dont la dimension est avantageusement comprise entre 0,20 et 25 mm. On peut y inclure un agent de couplage pour améliorer l'adhésion des fibres au polyamide, tels que les silanes ou les titanates, qui sont connus de l'homme de l'art. Des charges anioniques peuvent également être utilisées, telles que le graphite ou les fibres aramides (polyamides entièrement aromatiques).

De préférence, les fibres de verre sont présentes dans la composition généralement en une teneur de 10 à 50%, de préférence l'ordre de 30% en poids par rapport au poids total de la composition.

Le copolyamide selon l'invention ou encore la composition selon l'invention peut être utilisé(e) pour constituer une poudre ou bien des granulés. Le copolyamide selon l'invention ou encore la composition selon l'invention peut également être utilisé(e) pour constituer une structure pour des utilisations ou des transformations ultérieures.

Cette structure peut être monocouche lorsqu'elle n'est formée que du copolyamide ou que de la composition selon l'invention.

Cette structure peut également être une structure multicouche, lorsqu'elle comprend au moins deux couches et que l'une au moins des différentes couches formant la structure est formée du copolyamide ou de la composition selon l'invention.

La poudre, les granulés ou bien la structure, qu'elle soit monocouche ou multicouche, peuvent se présenter sous la forme de fibres (par exemple pour former un tissé ou un non tissé), d'un film, d'un tube, de filaments, d'un objet moulé, d'un objet tridimensionnel obtenu par technologie d'agglomération de poudre par fusion ou frittage provoqué par un rayonnement, d'un corps creux ou d'une pièce injectée.

Par exemple, les films et feuilles peuvent être utilisés dans des domaines aussi variés que celui de l'électronique ou de la décoration.

Le copolyamide selon l'invention ou la composition selon l'invention peut avantageusement être envisagé(e) pour la réalisation de tout ou partie d'éléments de biens d'équipements électriques et électroniques, tels que solénoïdes encapsulés, pompes, téléphone, ordinateur, systèmes multimédias, des équipements automobiles tels que tubes, connecteurs de tubes, pompes, des pièces injectées sous capot moteur, du matériel chirurgical, de l'emballage ou encore des articles de sport ou de loisirs, tels dans les équipements de vélo (selle, pédales).

Plus particulièrement, ces éléments d'équipements automobiles, lorsqu'ils présentent la forme de tubes et/ou de connecteurs, peuvent en particulier être utilisés dans des dispositifs d'admission d'air, de refroidissement (par exemple par air, liquide de refroidissement,...), de transport ou transfert de carburants ou de fluides (tels que huile, eau,...). De tels éléments peuvent bien évidemment être rendus antistatiques ou conducteurs, par addition préalable de quantités adaptées de charges conductrices (telles que noir de carbone, fibres de carbone, nanotubes de carbone,...) dans le copolyamide ou la composition selon l'invention.

Le copolyamide selon l'invention ou la composition selon l'invention peut également être envisagé(e) pour la réalisation de tout ou partie d'éléments d'équipement (notamment tubes, tuyaux, connecteurs, pompes,...) de transport ou transfert de gaz, de pétrole et de ses composés, en particulier destinés à une utilisation dans le domaine de l'Off Shore.

A titre d'exemples, lorsque le copolyamide selon l'invention ou la composition selon l'invention se trouve sous forme de poudre, cette dernière peut être utilisée dans des revêtements, et notamment les revêtements à résistance thermique améliorée destinés à recouvrir des pièces métalliques utilisées dans le transport de fluides (eau, produits chimiques, pétrole et gaz, ...), utilisées dans le domaine automobile, par exemple sous capot moteur, ou utilisées dans le domaine industriel, notamment les pièces de moteur. Les poudres selon l'invention peuvent également être utilisées en tant qu'additifs et/ou charges à tenue thermique améliorée dans des peintures nécessitant une température de cuisson élevée, c'est-à-dire supérieure à 180°C. Ces poudres peuvent être utilisées dans les compositions anti-corrosion, dans les compositions anti-abrasion, et/ou dans les peintures. Les poudres selon l'invention peuvent encore être utilisées dans les technologies d'agglomération de poudre par fusion ou frittage provoqué par un rayonnement, tel que par exemple un faisceau laser (« laser sintering ») ou un faisceau infrarouge (« IR sintering »), pour fabriquer des objets. Lesdites poudres peuvent en outre être utilisées comme additifs pour le papier, ou bien dans les gels d'électrophorèse, ou en tant qu'espaceurs dans les matériaux composites multicouches, notamment entre les couches de matériaux multicouches. Leurs utilisations dans l'industrie de l'emballage, des jouets, du textile, l'automobile, l'électronique, les cosmétiques, la pharmacie et la parfumerie sont envisageables.

A titre d'exemples, les granulés comprenant le copolyamide selon l'invention ou la composition selon l'invention sont utilisés pour la fabrication, notamment par extrusion, de filaments, de tubes, de films et/ou d'objets moulés.

D'autres buts et avantages de la présente invention apparaîtront à la lecture des exemples suivants donnés à titre nullement limitatif.

EXEMPLES :

1/ Exemples de synthèse d'un copolyamide selon l'invention

La décanediamine - 111.82 g (0,65 mol), l'acide téréphtalique - 104.57 g (0,63 mol), l'acide amino-11-undécanoïque - 87.00 g (0,43 mol), l'acide stéarique - 6,00g (0,021mol), l'hypophosphite de sodium à 60% dans l'eau - 0.40 g (0,0022 mol) et de l'eau - 30 g sont introduits dans un réacteur autoclave de 1 litre. Après élimination de l'oxygène gazeux par inertage à l'azote, le réacteur est porté à une température de 220°C matière, sous une pression de 20 bars. La température est progressivement augmentée en 1 heure jusqu' à 260°C en maintenant cette pression constante. La pression est en suite progressivement amenée par détente à la pression atmosphérique en 1 heure, tandis que la température matière est augmentée à 280°C. La polymérisation se poursuit à cette température pendant 30 minutes. Le polymère est extrait du réacteur, refroidi dans l'eau et granulé.

Un polymère de viscosité inhérente égale à 1.14 est obtenu.

La RMN indique un rapport molaire amide tertiaire/amide secondaire aromatique de 0.92 % et l'indice de polymolécularité obtenu par GPC est de 2.75.

2/ Essais comparatifs

A- Comparaison de polyamides en fonction du taux d'hypophosphite de sodium présent dans le milieu réactionnel :

Les polymères A à G sont préparés selon le procédé décrit ci-dessus. Ce procédé est adapté en fonction de la nature des réactifs et des proportions en mole de ceux-ci, telles qu'indiquées dans le tableau ci-dessous.

- Le rapport molaire amide aromatique tertiaire/amide aromatique secondaire, noté RMN Amide T/S dans le tableau, est obtenu par RMN.

- L'indice de polymolécularité est obtenu par GPC (Gel Permeation Chromatography) selon les conditions expérimentales suivantes :

    Appareillage : Waters Alliance 2695 instrument
    Solvant : HexaFluoroIsoPropanol stabilisé avec 0,05 M trifluoroacétate de potassium (KTFA).
    Débit : 1ml/minute
    Température des colonnes : 40°C
    Jeu de deux colonnes chez PSS :PFG 1000Å et PFG 100Å
    Concentration des échantillons : 1 g/L (dissolution à température ambiante pendant 24h)
    Volume d'injection: 100 $\mu$l.
    Détection réfractométrique à 40°C
    Détection UV à 228 nm
    Etalonnage PMMA de 1900000 à 402 g.mol-1.

L'indice de polymolécularité est déterminé comme étant égal au rapport entre masse moléculaire en poids et en nombre Mw/Mn. La précision de la mesure est donnée à 5% près.

- La viscosité inhérente (notée $\eta$) est mesurée dans le m-crésol, à 20°C, au moyen d'un tube micro-Ubbelohde SCHOTT type 538-23 IIC.
- Les température de fusion, notée Tf et température de cristallisation, notée Tc sont déterminées par Differential Scan Calorimetry (DSC), au moyen d'un DSC Netzsch 204F1 (refroidissement Intracooler) selon le programme suivant :

    - Ière chauffe : de -50 à 250°C à 20°C/min.
    - Refroidissement : de 250 à -50°C à 20°C/min.

| | 10.T (en mol) | 11 (en mol) | Acide Stéarique (en %) | NaH$_2$P O$_2$ (en %) | Ip | Amide T/S | $\eta$ | Tc (°C) | Tf (°C) |
|---|---|---|---|---|---|---|---|---|---|
| A (invention) | 1 | 0,7 | - | **0,08** | **2,519** | 0,65 | 1,1 | 209,8 | 262,8 |
| B (comparatif) | 1 | 0,7 | - | - | 7 | 1,72 | 1,59 | 176,1 | 257,5 |
| C (invention) | 1 | 0,7 | 0.50 | 0.24 | **2.878** | 0.99 | 1.16 | 208,3 | 261,1 |

(suite)

| | 10. T (en mol) | 11 (en mol) | Acide Stéarique (en %) | NaH$_2$P O$_2$ (en %) | Ip | Amide T/S | η | Tc (°C) | Tf (°C) |
|---|---|---|---|---|---|---|---|---|---|
| D (invention) | 1 | 0,7 | 0.50 | 0.08 | 2.605 | 0.95 | 1.08 | 208 | 261,2 |
| E (Comparatif) | 1 | 0.7 | 0.50 | - | 6.005 | 2.13 | 1.2 | 203 | 260 |
| F (invention) | 1 | 0.7 | 2.50 | 0.08 | **3.048** | 0.77 | 1.17 | 208,1 | 261,5 |
| G (Comparatif | 1 | 0,7 | 2.50 | 0.02 | 4.165 | 1.27 | 1.29 | 205,1 | 253,9 |

B- Comparaison de matériaux à base de copolyamides en fonction de la présence d'hypophosphite de sodium présent dans le milieu réactionnel :

Les polymères D et E définis dans le tableau ci-dessus ont été mélangés dans un malaxeur BUSS avec environ 30% de fibre de verre et 1,4% d'un additif antioxydant Iodine 201 de Ciba. Des barreaux de ces formulations, désignées D' et E' respectivement, ont été injectés suivant la norme Iso 179. Une partie de ces barreaux a été conservée pour l'expérience 1, et l'autre partie a été conservée pour l'expérience 2.

expérience 1 : Choc initial

Les barreaux ont été conditionnés à -40°C pendant au moins 2 heures. Ils ont ensuite été testés en choc pendulaire Charpy ISO 179-1eU avec un pendule de 7.5 Joules. L'énergie absorbée par les barreaux a été mesurée, elle est exprimée en kJ/m$^2$.

expérience 2 : Choc après vieillissement

Les barreaux ont été placés dans des autoclaves de 1,5 litre (à raison de 16 barreaux par autoclave) contenant 1,4 litre d'essence E85 (constituée de 85% d'éthanol Rectapur et 15% de fluide L, une essence de type sans plomb 95). Ces autoclaves ont été placées dans des étuves ventilées à 140°C pendant 168 heures. Après refroidissement, ces barreaux, ont immédiatement été conditionnés à -40°C pendant au moins 2 heures.

Ils ont ensuite été testés en choc pendulaire Charpy ISO 179-1eU avec un pendule de 7.5 Joules, de manière identique à l'expérience 1. L'énergie absorbée par les barreaux a été mesurée, elle est exprimée en kJ/m$^2$.

Le barreau produit à partir de la formulation E' (avec le polyamide E synthétisé sans hypophosphite de sodium), ayant subi le vieillissement présente des fissurations après le séjour dans l'E85 à 140°C. Par conséquent, l'expérience n'a pas été réalisée sur cet échantillon.

Les résultats sont décrits dans le tableau suivant :

| | D' (invention) | E' (Comparatif) |
|---|---|---|
| % de fibre de verre dans le matériau | 30 | 30 |
| Ip de la formulation | 2,75 | 5,7 |
| Viscosité inhérente de la formulation | 1,04 | 1,1 |
| Expérience 1 : choc initial (kJ/m$^2$) | 83 | 55,5 |
| Expérience 2 : Choc après vieillissement (kJ/m$^2$) | 75,3 | fissurations |

**Revendications**

**1.** Copolyamide répondant à l'une quelconque des formules choisies parmi 11/10T et 12/10T, dans lesquelles :

10. T désigne un motif obtenu à partir de la polycondensation de 1,10-décanediamine et de l'acide téréphtalique, 11 désigne l'acide 10-aminoundécanoïque (noté 11) ou l'acide amino-11-undécanoïque (noté 11), 12 désigne l'acide amino-12-dodécanoïque (noté 12),

**caractérisé en ce qu'**il présente un indice de polymolécularité, noté Ip inférieur ou égal à 3,5, mesuré par chromatographie de perméation de gel.

2. Copolyamide selon la revendication 1, **caractérisé en ce qu'**il présente un indice de polymolécularité compris entre 2 et 3.

3. Procédé de préparation du copolyamide tel que défini à l'une quelconque des revendications 1 à 2, **caractérisé en ce qu'**il comprend une étape de polycondensation des comonomères : monomère conduisant au motif 11 ou 12, 1,10-décanediamine et acide téréphtalique, en présence d'acide hypophosphoreux ou d'au moins un de ses sels en une teneur comprise entre 0,05 à 3,00 % en poids par rapport au poids de la somme des comonomères présents dans le milieu réactionnel.

4. Procédé selon la revendication 3, **caractérisé en ce que** l'hypophosphite de sodium est utilisé.

5. Procédé selon la revendication 3 ou 4, **caractérisé en ce que** l'acide hypophosphoreux ou au moins un de ses sels est présent en une teneur comprise entre 0,05 et 1,00 % en poids par rapport au poids de la somme des comonomères présents dans le milieu réactionnel.

6. Composition comprenant au moins un copolyamide tel que défini à la revendications 1 ou 2.

7. Composition selon la revendication 6, **caractérisée en ce qu'**elle comprend au moins un additif choisi parmi les charges, les fibres de verre, les colorants, les stabilisants, notamment UV, les plastifiants, les modifiants chocs, les agents tensioactifs, les pigments, les azurants, les anti-oxydants, les cires naturelles, les polyoléfines, et leurs mélanges.

8. Utilisation d'un copolyamide tel que défini à la revendications 1 ou 2 ou d'une composition telle que définie à la revendication 6 ou 7 pour constituer une poudre, des granulés, une structure monocouche ou au moins une couche d'une structure multicouche.

9. Utilisation selon la revendication 8, **caractérisée en ce que** la poudre, les granulés, la structure monocouche ou bien la structure multicouche se présentent sous la forme de fibres, d'un film, d'un tube, de filaments, d'un objet moulé, d'un objet tridimensionnel obtenu par une technologie d'agglomérisation de poudre par fusion ou frittage provoqué par un rayonnement, d'un corps creux ou d'une pièce injectée.

10. Utilisation selon la revendication 8 **caractérisé en ce que** lorsque ledit copolyamide ou ladite composition se trouve sous forme de poudres, alors il ou elle est utilisé en tant qu'additif et/ou charge dans les peintures ; dans les revêtements, dans les compositions anti-corrosion, dans les compositions anti-abrasion ; dans les technologies d'agglomération de poudre par fusion ou frittage provoqué par un rayonnement pour fabriquer des objets ; pour le papier ; dans les gels d'électrophorèse ; dans les matériaux composites multicouches ; dans l'industrie de l'emballage les jouets ; le textile ; l'automobile ; l'électronique ; les cosmétiques ; la pharmacie et la parfumerie.

11. Utilisation selon la revendication 10, en tant qu'additif dans les revêtements à résistance thermique améliorée pour pièces métalliques utilisées dans le transport de fluides, dans le domaine automobile, sous capot moteur, dans le domaine industriel et/ou dans les pièces de moteur.

**Patentansprüche**

1. Copolyamid, welche derfolgenden allgemeinen Formulierung entsprechen: 11/10.T und 12/10.T wobei:

   10.T einen Baustein bezeichnet, der ausgehend von der Polykondensation von 1, 10-Decandiamin und Terephthalsäure erhalten wird,
   11 10-Aminoundecansäure (Formelzeichen 11) oder 11-Aminoundecansäure (Formelzeichen 11) erhalten wird,12 12-Aminododecansäure (Formelzeichen 12) erhalten wird,

   **dadurch gekennzeichnet, dass** es einen Polydispersionsgrad aufweist, der mit Ip bezeichnet wird und kleiner oder gleich 3,5 ist, wobei die Messung mittels Gelpermeationschromatographie erfolgt.

**2.** Copolyamid nach Anspruch 1, **dadurch gekennzeichnet, dass** es einen Polydispersionsgrad im Bereich von 2 bis 3 aufweist.

**3.** Herstellungsverfahren für das Copolyamid gemäß der Begriffsbestimmung in einem beliebigen der Ansprüche 1 und 2, **dadurch gekennzeichnet, dass** es einen Schritt der Polykondensation der folgenden Comonomere umfasst: ein Monomer, das zum Baustein 11 oder 12 führt, 1, 10-Decandiamin und Terephthalsäure, in Gegenwart von hypophosphorige Säure oder mindestens eines ihrer Salze, wobei der Gehalt der letzteren im Bereich von 0,05 bis 3,00 Gewichts-% liegt, unter Bezugnahme auf das Gewicht sämtlicher Comonomere, die im Reaktionsmedium vorliegen.

**4.** Verfahren nach Anspruch 3, **dadurch gekennzeichnet, dass** Natriumhypophosphit verwendet wird.

**5.** Verfahren nach Anspruch 3 oder 4, **dadurch gekennzeichnet, dass** die hypophosphorige Saüre oder mindestens eines ihrer Salze derart vorliegt, dass ihr Gehalt im Bereich von 0,05 bis 1,00 Gewichts-% liegt, unter Bezugnahme auf das Gewicht sämtlicher Comonomere, die im Reaktionsmedium vorliegen.

**6.** Zusammensetzung, die mindestens ein Copolyamid gemäß der Begriffsbestimmung in Anspruch 1 oder 2 umfasst.

**7.** Zusammensetzung nach Anspruch 6, **dadurch gekennzeichnet, dass** sie mindestens einen Zusatzstoff umfasst, der aus den Füllstoffen, den Glasfasern, den Farbstoffen, den Stabilisatoren, insbesondere gegenüber UV-Licht, den Weichmachern, den Schlagzähmodifikatoren, den grenzflächenaktiven Stoffen, den Pigmenten, den optischen Aufhellern, den Antioxidantien, den natürlichen Wachsen, den Polyolefinen und deren Mischungen ausgewählt ist.

**8.** Verwendung eines Copolyamids gemäß der Begriffsbestimmung in Anspruch 1 oder 2 oder einer Zusammensetzung gemäß der Begriffsbestimmung in Anspruch 6 oder 7, um ein Pulver, ein Granulat, eine einlagige Struktur oder mindestens eine Schicht einer mehrlagigen Struktur herzustellen.

**9.** Verwendung nach Anspruch 8, **dadurch gekennzeichnet, dass** das Pulver, das Granulat, die einlagige Struktur oder auch die mehrlagige Struktur in Form von Fasern, einer Dünnschicht, einer Röhre, von Filamenten, eines Formkörpers, das aus einem Pulveragglomerationstechnik durch Schmelzen oder Sintern durch Strahlung, eines Hohlkörpers oder eines Spritzgussteils vorliegt.

**10.** Verwendung nach Anspruch 8, **dadurch gekennzeichnet, dass** das Copolyamid oder die Zusammensetzung, wenn es/sie in Pulverform vorliegt, als Zusatzstoff und/oder Füllstoff in Anstrichmitteln, in Beschichtungen, in Korrosionsschutz-Zusammensetzungen, in Zusammensetzungen zur Erhöhung der Abriebfestigkeit; in Techniken zur Agglomeration von Pulvern durch Schmelzen oder Sintern, wobei dies durch eine Strahlung hervorgerufen wird, um Gegenstände herzustellen; für Papier; in Elektrophoresegelen; in mehrlagigen Verbundwerkstoffen; in der Verpackungsindustrie;bei Spielwaren; im Textilsektor; im Automobilsektor; in der Elektronik; in kosmetischen Mitteln; in der Pharmazie und Parfümerie verwendet wird.

**11.** Verwendung nach Anspruch 10, **dadurch gekennzeichnet**, als Zusatzstoff in Beschichtungen mit verbesserter Hitzebeständigkeit für Metallteile verwendet wird, die bei der Beförderung von Fluiden, im Automobilsektor, unter der Motorhaube, in der Industrie und/oder in Motorteilen verwendet werden.

**Claims**

**1.** Copolyamide corresponding to any one of the formulas 11/10T and 12/10T,
in which:

> 10,T denotes a unit obtained from the polycondensation of 1,10-decanediamine and terephthalic acid,
> 11 denotes the 10-aminoundecanoic acid (denoted by 11), or the 11-aminoundecanoic acid (denoted by 11),
> 12 denotes the 12-aminododecanoic acid (denoted by 12),

**characterized in that** it has a polydispersity index, denoted by Ip, of less than or equal to 3.5, measured by gel permeation chromatography.

**2.** Copolyamide according to Claim 1, **characterized in that** it has a polydispersity index between 2 and 3.

3. Process for preparing the copolyamide as defined in any one of Claims 1 to 2, **characterized in that** it comprises a polycondensation step of the comonomers: monomer resulting in the unit 11 or 12, 1,10-decanediamine and terephthalic acid, in the presence of hypophosphorous acid or at least one of the salts thereof in a content between 0.05 and 3.00% by weight relative to the weight of the sum of the comonomers present in the reaction medium.

4. Process according to Claim 3, **characterized in that** sodium hypophosphite is used.

5. Process according to Claim 3 or 4, **characterized in that** the hypophosphorous acid or at least one of the salts thereof is present in a content between 0.05 and 1.00% by weight relative to the weight of the sum of the comonomers present in the reaction medium.

6. Composition comprising at least one copolyamide as defined in Claims 1 or 2.

7. Composition according to Claim 6, **characterized in that** it comprises at least one additive chosen from fillers, glass fibres, dyes, stabilizers, especially UV stabilizers, plasticizers, impact modifiers, surfactants, pigments, brighteners, antioxidants, natural waxes, polyolefins and mixtures thereof.

8. Use of a copolyamide as defined in Claims 1 or 2 or of a composition as defined in Claim 6 or 7 in order to form a powder, granules, a single-layer structure or at least one layer of a multilayer structure.

9. Use according to Claim 8, **characterized in that** the powder, the granules, the single-layer structure or else the multilayer structure are in the form of fibres, a film, a pipe, filaments, a moulded article, a three-dimensional article obtained by a powder agglomeration technology by melting or sintering brought about by radiation, a hollow body or an injection-moulded part.

10. Use according to Claim 8, **characterized in that** when said copolyamide or said composition is in the form of a powder, it is used as an additive and/or filler in paint; in coatings, in anti-corrosion compositions, in anti-abrasion compositions; in technologies for powder agglomeration by melting or sintering brought about by radiation in order to manufacture articles; for paper; in electrophoresis gels; in multilayer composites; in the packaging industry; the toy industry; the textile industry; the motor vehicle industry, the electronics industry; the cosmetics industry; the pharmaceutical industry and the fragrance industry.

11. Use according to Claim 10, as an additive in coatings with improved thermal resistance for metal parts used in the transport of fluids, in the motor vehicle field, under the bonnet, in the industrial field and/or in engine parts.

**EP 2 310 439 B2**

## RÉFÉRENCES CITÉES DANS LA DESCRIPTION

**Documents brevets cités dans la description**

- WO 9314145 A

- EP 1505099 A